# EUROPÄISCHE PATENTANMELDUNG

(11) **EP 1 795 815 A1**
(43) Veröffentlichungstag der Anmeldung: **13.06.2007**
(21) Anmeldenummer: 05026664.2
(22) Anmeldetag: 07.12.2005
(51) Int. Cl.: F24D 3/10

(54) **Fluidverteilersegment**

(71) Anmelder: SBK Siegfried Böhnisch Kunststofftechnik GmbH, 74632 Neuenstein (DE)
(72) Erfinder: Böhnisch, Andreas A., 74196 Neuenstadt/K (DE)
(74) Vertreter: Geitz Truckenmüller Lucht

(57) **Zusammenfassung**

Die Erfindung betrifft ein Fluidverteilersegment (20.1, 20.2, 20.3), das dazu bestimmt und geeignet ist, zusammen mit wenigstens einem benachbarten Verteilersegment einen Fluidverteiler (22) auszubilden, mit einem einen Leitungsabschnitt (25) umschließenden Gehäuse (26), das voneinander weg weisende Stirnseiten aufweist, die quer zu der Längsachse des Leitungsabschnitts (25) ausgebildet sind, und mit einer von dem Leitungsabschnitt (25) quer zu dessen Längsachse abzweigenden Abzweigleitung (30). Der Leitungsabschnitt (25) weist eine sich in Richtung seiner Längsachse erstreckende Trennwand (31.1, 31.2, 31.3) auf, die den Leitungsabschnitt (25) in wenigstens zwei, sich in Richtung dessen Längsachse erstreckende Kanalteile teilt, von denen wenigstens ein erster Kanalteil einen Hauptleitungsabschnitt (35.1, 35.2, 35.3) ausbildet und von denen wenigstens ein zweiter Kanalteil einen Abzweigleitungsabschnitt (36.1, 36.2, 36.3) ausbildet, in den die Abzweigleitung (30) mündet.

## Beschreibung

Die Erfindung betrifft ein Fluidverteilersegment, insbesondere ein Wasserverteilersegment, vorzugsweise in Heizungsanlagen, das dazu bestimmt und geeignet ist, zusammen mit wenigstens einem benachbarten Verteilersegment einen vorzugsweise ein Verteilerventilsegment aufweisenden Fluidverteiler auszubilden, mit einem einen Leitungsabschnitt umschließenden, vorzugsweise aus Kunststoff bestehenden Gehäuse, das voneinander weg weisende Stirnseiten aufweist, die quer zu der Längsachse des Leitungsabschnitts und vorzugsweise parallel zueinander ausgebildet sind, und mit einer von dem Leitungsabschnitt quer, vorzugsweise senkrecht zu dessen Längsachse abzweigenden Abzweigleitung.

Derartige Verteilersegmente sind beispielsweise aus der DE 30 43 422 A1, der DE 35 09 718 A1, der DE 196 087 180 A1, der DE 101 14 926 A1 und der DE 20 2004 007 669 U1 bekannt geworden. Diese werden bevorzugt in Heizungsanlagen, insbesondere im Vor- und/oder Rücklauf von Fußbodenheizungen und dergleichen seit vielen Jahren erfolgreich eingesetzt. Dabei kann es vorkommen, dass einem zu beheizenden Raum mehrere sogenannte Heizschlangen, zumeist in Form von flexiblen Leitungen, insbesondere aus Kunststoff, zugeordnet sind, die jeweils an einen Vorlauf und an einen Rücklauf anzuschließen sind. Dabei muss bisher jeder Heizschlange ein Verteilerventil zugeordnet werden, mit dem der Durchfluss durch die jeweilige Heizschlange eingestellt werden kann. Für den Fall einer automatisierten Regelung der Raumtemperatur, die in manchen Ländern sogar vorgeschrieben ist, müssen diese Verteilerventile mit elektrischen Stellantrieben versehen werden. Nachdem also bislang jeder Heizschlange ein Verteilerventil und gegebenenfalls auch ein Stellantrieb zugeordnet werden musste, sind entsprechend hohe Kosten angefallen.

Es ist eine Aufgabe der Erfindung ein Fluidverteilersegment zur Verfügung zu stellen, mit dem die vorstehenden Nachteile vermieden werden können, das insbesondere kostengünstig herstellbar und platzsparend, vorzugsweise zusammen mit herkömmlichen Verteilersegmenten, anordenbar ist und das eine gute Isolation der davon umfassten Kanalteile ermöglicht.

Diese Aufgabe wird durch die Merkmale des Anspruches 1 insbesondere dadurch gelöst, dass der Leitungsabschnitt eine sich in Richtung seiner Längsachse erstreckende Trennwand aufweist, die den Leitungsabschnitt in wenigstens zwei sich in Richtung dessen Längsachse erstreckende Kanalteile teilt, von denen wenigstens ein erster Kanalteil einen Durchgangskanal eines Hauptleitungsabschnitts ausbildet, der zu den voneinander weg weisenden Stirnseiten des Gehäuses hin offen ist, und von denen wenigstens ein zweiter Kanalteil einen Abzweigleitungsabschnitt ausbildet, in den die Abzweigleitung mündet und der zu wenigstens einer der voneinander weg weisenden Stirnseiten des Gehäuses hin offen ist.

Mithilfe eines derartigen Fluidverteilersegments lässt sich vorteilhaft ein Fluidverteiler aufbauen, der aus mehreren derartigen und gegebenenfalls auch ähnlichen sowie herkömmlichen Verteilersegmenten besteht, von denen vorzugsweise wenigstens ein Verteilersegment als Verteilerventilsegment ausgebildet ist. Die erfindungsgemäßen Fluidverteilersegmente lassen sich also besonders vorteilhaft in das bestehende Baukastensystem von Verteilersegmenten gemäß den vorstehend bezeichneten Schutzrechten der Anmelderin integrieren. Die erfindungsgemäßen Fluidverteilersegmente können kostengünstig hergestellt werden und sind auch im Rahmen des bestehenden Baukastensystems besonders platzsparend anordenbar. Nicht nur der Hauptleitungsabschnitt sondern auch der Abzweigleitungsabschnitt sind innerhalb des Gehäuses gut isoliert untergebracht.

Wenn das Gehäuse aus Kunststoff, insbesondere aus einem thermoplastischen Kunststoff wie Polypropylen oder Polyamid, insbesondere mit Glasfaserverstärkung besteht, kann dieses besonders kostengünstig, z. B. im Spritzgussverfahren hergestellt werden. Von Vorteil ist ferner, dass die Spritzgießwerkzeuge für die herkömmlichen Verteilersegmente vergleichsweise einfach und kostengünstig modifiziert werden können, um eine Herstellung der erfindungsgemäßen Fluidverteilersegmente zu ermöglichen.

Gemäß einer vorteilhaften Weiterbildung kann vorgesehen sein, dass die Trennwand den Leitungsabschnitt quer zu seiner Längsachse vollständig durchquert. Dies ermöglicht eine kostengünstige Herstellung.

Ferner kann vorgesehen sein, dass die Trennwand sich etwa senkrecht zu der Längsachse der Abzweigleitung erstreckt. Dies ermöglicht eine vorteilhafte Fluidstromaufteilung bei kostengünstigen Herstellungsmöglichkeiten.

Von besonderem Vorteil ist es, wenn die Trennwand die Längsachse des Leitungsabschnittes enthält. Dadurch lässt sich eine besonders vorteilhafte Fluidstromaufteilung in Verbindung mit günstigen Strömungs- und Druckverhältnissen sowie einer besonders kostengünstigen Herstellung der Fluidverteilersegmente realisieren.

Ferner kann vorgesehen sein, dass die Trennwand im Wesentlichen flach, vorzugsweise plattenförmig gestaltet ist. Neben den vorstehenden Vorteilen kann dadurch der Druckverlust im Bereich der Trennwand minimiert werden.

Gemäß einer besonders vorteilhaften Ausführungsvariante kann vorgesehen sein, dass das Fluidverteilersegment als ein auch als Zonenventil bezeichnetes Verteilerventilsegment mit einem quer, vorzugsweise radial zu dem Leitungsabschnitt angeordneten und vorzugsweise wenigstens teilweise in diesen hineinragenden Abzweigrohr gestaltet ist, das mit der Abzweigleitung fluidverbunden ist und einen verschließbaren Ventilsitz für ein Einstell- und Absperrelement zum Einstellen und gegebenenfalls Absperren des Flüssigkeitsstromes von dem Hauptleitungsabschnitt in das Abzweigrohr und/oder umgekehrt aufweist. Dadurch lassen sich vorteilhafte Möglichkeiten zum Einstellen und/oder Abstellen des Fluidstromes von dem Hauptleitungsabschnitt in die Abzweigleitung und in den Abzweigleitungsabschnitt und/oder umgekehrt erreichen.

In vorteilhafter Weiterbildung kann vorgesehen sein, dass das mit dem Ventilsitz versehene Abzweigrohr im Bereich des von dem Gehäuse umschlossenen Leitungsabschnitts, vorzugsweise in dem von dem Gehäuse umschlossenen Leitungsabschnitt in den Abzweigleitungsabschnitt des zweiten Kanalteils mündet, so dass durch ein Verstellen und gegebenenfalls Verschließen des Abzweigrohrs mithilfe des Einstell- und Absperrelements ein Einstellen und gegebenenfalls Absperren des Fluidstromes von dem Hauptleitungsabschnitt in die Abzweigleitung und in den Abzweigleitungsabschnitt und/oder umgekehrt bewirkbar ist bzw. bewirkt wird.

Zu den vorstehenden Zwecken kann es ferner von Vorteil sein, wenn der den Abzweigleitungsabschnitt bildende zweite Kanalteil innerhalb des Verteilerventilsegments nur über das Abzweigrohr mit dem den Hauptleitungsabschnitt bildenden ersten Kanalteil fluidverbunden ist. Auf diese Weise lässt sich eine vorteilhafte Trennung von Funktionen und Strömungswegen erreichen.

Gemäß einer vorteilhaften Weiterbildung kann vorgesehen sein, dass der den Abzweigleitungsabschnitt bildende zweite Kanalteil mit einer sich quer, vorzugsweise senkrecht zu der Längsachse des Leitungsabschnitts erstreckenden, vorzugsweise im Bereich des Abzweigrohrs angeordneten Querwand begrenzt ist. Dadurch ist eine einfache und kostengünstige Herstellung möglich.

Dabei kann vorgesehen sein, dass die Querwand die Längsachse des Abzweigrohrs enthält oder mit sich vorzugsweise beiderseits der Längsachse des Abzweigrohrs erstreckenden Querwandteilen gestaltet ist, deren Querachsen die Längsachsen des Abzweigrohrs schneiden. Schließlich kann außerdem oder zusätzlich vorgesehen sein, dass die Querwand einen Teil des Abzweigrohres ausbildet und/oder dass die Querwand senkrecht zu der Trennwand ausgebildet ist.

Gemäß einer weiteren vorteilhaften Ausführungsvariante kann vorgesehen sein, dass das Fluidverteilersegment als ein Zwischensegment gestaltet ist, wobei die Trennwand sich in Richtung der Längsachse des Leitungsabschnitts im Wesentlichen oder über die gesamte Länge des Fluidverteilersegments zwischen den voneinander weg weisenden Stirnseiten des Gehäuses erstreckt. Auf diese Weise ist ein Anschluss von weiteren Abzweigleitungen, respektive Heizschlangen einfach, kostengünstig und platzsparend möglich, wobei auch die Möglichkeit besteht, den Durchfluss durch diese Abzweigleitungen bzw. Heizschlangen mithilfe eines einzigen Verteilerventils, das vorteilhaft mit nur einem einzigen Stellantrieb ausgestattet sein kann, regeln bzw. einstellen zu können.

Gemäß einer weiteren besonders vorteilhaften Ausführungsvariante der Erfindung kann vorgesehen sein, dass das Fluidverteilersegment als ein Endsegment gestaltet ist, bei dem der den Abzweigleitungsabschnitt bildende zweite Kanalteil des Leitungsabschnitts zu der einen Stirnseite des Gehäuses hin durch eine Querwand abgeschlossen ist, während der zweite Kanalteil zu der anderen Stirnseite des Gehäuses hin offen ist, so dass ein Flüssigkeitsstrom von dem Abzweigleitungsabschnitt in die Abzweigleitung und/oder umgekehrt möglich ist. Auf diese Weise ist zum einen der Bereich der Abzweigleitungsabschnitte mehrerer aneinander anschließender erfindungsgemäßer Fluidverteilersegmente begrenzbar, die mit nur einem einzigen Verteilerventil regelbar sind, und zum anderen ergeben sich dadurch vorteilhafte Anschlussmöglichkeiten, insbesondere für weitere herkömmliche Verteilersegmente im Rahmen des bestehenden Baukastensystems.

Wenn die Endsegment-Querwand die eine Stirnseite des Gehäuses begrenzt, ist eine einfache und kostengünstige Herstellung eines derartigen Endsegments möglich.

Die Erfindung betrifft auch einen Fluidverteiler, der wenigstens ein als Verteilerventilsegment ausgebildetes Fluidverteilersegment nach einem der Ansprüche 7 bis 13 und wenigstens ein als Endsegment gestaltetes Fluidverteilersegment nach einem der Ansprüche 15 oder 16 enthält.

In vorteilhafter Ausgestaltung eines derartigen Fluidverteilers kann vorgesehen sein, dass zwischen dem als Verteilerventilsegment ausgebildeten Fluidverteilersegment und dem als Endsegment gestalteten Fluidverteilersegment wenigstens ein als Zwischensegment gestaltetes Fluidverteilersegment nach Anspruch 14 angeordnet ist.

Weitere Vorteile, Merkmale und Gesichtspunkte der Erfindung ergeben sich aus den abhängigen Ansprüchen sowie aus dem nachfolgenden Beschreibungsteil, in dem mehrere Ausführungsbeispiele der Erfindung beschrieben sind.

Es zeigen:
- Fig. 1: ein erstes Ausführungsbeispiel eines als Verteilerventilsegment gestalteten Verteilersegments in einer dreidimensionalen Ansicht;
- Fig. 2: einen Längsschnitt des Verteilersegments gemäß Figur 1;
- Fig. 3: eine Seitenansicht des Verteilersegments gemäß den Figuren 1 und 2 von rechts;
- Fig. 4: ein zweites Ausführungsbeispiel eines als Zwischensegment gestalteten Verteilersegments in dreidimensionaler Ansicht;
- Fig. 5: einen Längsschnitt des Verteilersegments gemäß Figur 4;
- Fig. 6: eine Seitenansicht des Verteilersegments gemäß den Figuren 4 und 5 von rechts;
- Fig. 7: ein drittes Ausführungsbeispiel eines als Endsegment gestalteten Verteilersegments in dreidimensionaler Ansicht;
- Fig. 8: einen Längsschnitt des Verteilersegments gemäß Figur 7;
- Fig. 9: eine Seitenansicht des Verteilersegments gemäß den Figuren 7 und 8 von rechts;
- Fig. 10: einen Fluidverteiler 22, der sowohl mit den drei Verteilersegmenten gemäß den Figuren 1 bis 9 als auch mit Verteilerventilsegmenten gemäß dem Stand der Technik aufgebaut bzw. zusammengebaut ist;
- Fig. 11: einen Längsschnitt durch die Verteilersegmente des Flüssigkeitsverteilers gemäß Fig. 10.

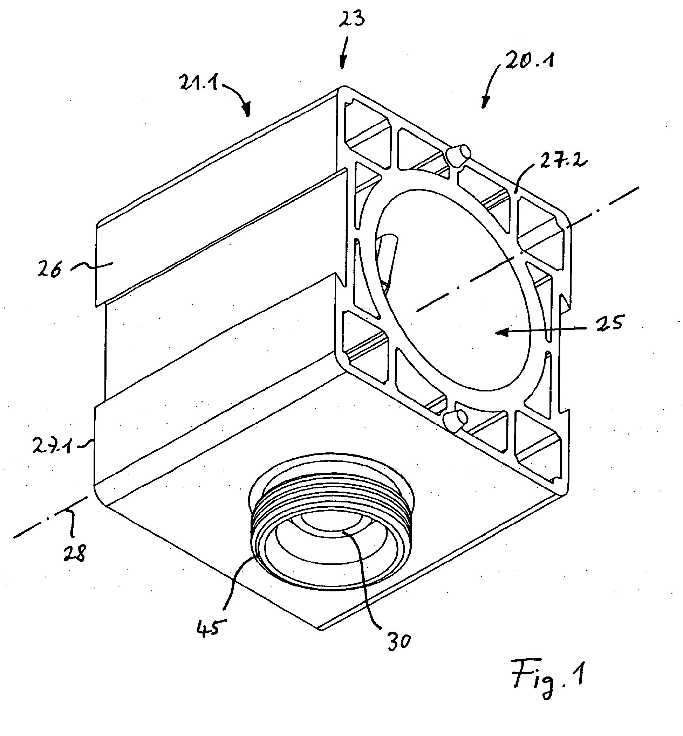

Jedes der insbesondere in den Figuren 1 bis 9 gezeigten Verteilersegmente 20.1, 20.2, 20.3 umfasst ein einen Leitungsabschnitt 25 umschließendes Gehäuse 26. Die Gestaltung und Ausbildung des jeweiligen Gehäuses 26 entspricht insbesondere hinsichtlich dessen Querschnitt, dessen Außenkontur und dessen Anschlusselementgestaltung dem beispielsweise aus der DE 101 14 926 A1 hervorgehenden Gehäuse. Bei letzterem handelt es sich um ein kubisches Gehäuse eines Verteilerventils mit einem Außengewindestutzen einer Ventileinsetzöffnung zur Aufnahme eines Aufsetzelements für eine Ventileinstellung. Die Ventileinsetzöffnung weist ein Innengewinde zur Aufnahme eines herkömmlichen Einstell- und Verschlussventilteils auf.

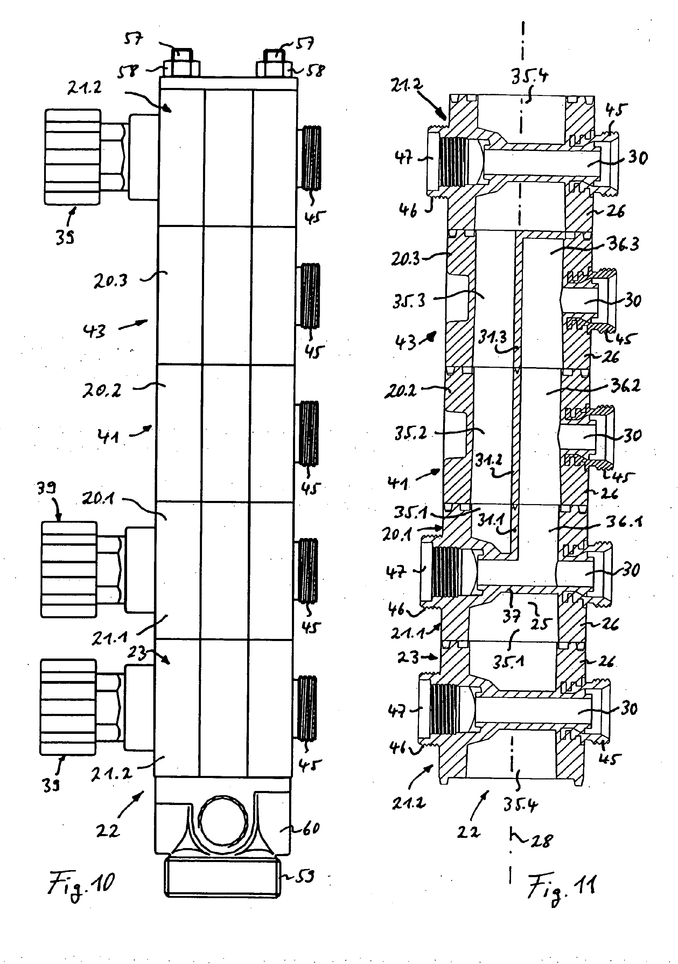

Ein entsprechender Außengewindestutzen 46 mit einer Ventileinsetzöffnung 47 ist bei dem als Verteilerventilsegment 21.1 gestalteten Verteilersegment 20.1 gemäß dem in den Figuren 1 bis 3 gezeigten ersten Ausführungsbeispiel der Erfindung vorgesehen, während bei dem in den Figuren 4 bis 6 gezeigten zweiten Ausführungsbeispiel der Erfindung und bei dem in den Figuren 7 bis 9 gezeigten dritten Ausführungsbeispiel der Erfindung das jeweilige Verteilersegment 20.2, 20.3 kein Verteilerventilsegment ausbildet und demgemäß auch nicht mit einem entsprechenden Außengewindestutzen einer Ventileinsetzöffnung versehen ist. Die Gehäuse dieser beiden Verteilersegmente 20.2, 20.3 weisen in dem entsprechenden Gehäusebereich, welcher dem jeweiligen Anschluss 45 für eine Abzweigleitung 30 gegenüberliegt, eine Vertiefung bzw. Ausnehmung 24 auf, die hier in einer senkrecht zu der Längsachse 34 der Abzweigleitung 30 angeordneten Schnittebene hier einen etwa kreisrunden Querschnitt aufweist. Diese Ausnehmung 24 ist im Wesentlichen aus Gründen der Vermeidung einer Lunkerbildung in dem aus Kunststoff gebildeten Gehäuse 26 vorgesehen.

Das jeweilige Gehäuse 26 der drei Verteilersegmente 20.1, 20.2, 20.3 besteht aus einem thermoplastischen Kunststoff, beispielsweise aus Polypropylen oder Polyamid, insbesondere mit Glasfaserverstärkung, und ist vorzugsweise durch Spritzgießen hergestellt.

Es versteht sich, dass das jeweilige Gehäuse 26 der Verteilersegmente 20.1, 20.2, 20.3 hinsichtlich seines Querschnittes, einschließlich dessen Teil-Wand- und Hohlraum-Gestaltung sowie seiner Außenkontur und Außenabma-ße genauso oder ähnlich gestaltet sein kann, wie beispielsweise die aus der DE 30 43 422 A1, der DE 35 09 718 A1, der DE 196 08 780 A1 oder der DE 20 2004 007 669 U1 hervorgehenden Gehäuse, wobei das Gehäuse des Verteilers gemäß der letztgenannten Druckschrift im Unterschied zu den Gehäusen der zuvor genannten Druckschriften eine im Wesentlichen kreiszylindrische Außenkontur aufweist. Der Einfachheit halber und zur Vermeidung von Wiederholungen wird der Inhalt der vorgenannten Druckschriften an dieser Stelle vollinhaltlich aufgenommen.

Die aus den vorgenannten Druckschriften hervorgehenden Gehäuse umschließen einen Hauptleitungsabschnitt mit einer Gehäusewandung, die in einer Schnittebene senkrecht zu der Längsachse des Hauptleitungsabschnitts einen im Wesentlichen kreisrunden Querschnitt aufweist. Es versteht sich jedoch, dass dieser Leitungsabschnitt auch einen anderen Innenquerschnitt, beispielsweise einen quadratischen oder rechteckigen Innenquerschnitt aufweisen kann. Der dort als Hauptleitungsabschnitt bezeichnete Leitungsabschnitt ist als Durchgangsöffnung gestaltet, die nach den voneinander weg weisenden Stirnseiten des jeweiligen Gehäuses hin offen ist.

Auch die Verteilersegmente 20.1, 20.2, 20.3 weisen ein einen entsprechenden bzw. ähnlichen Leitungsabschnitt 25 umschließendes Gehäuse 26 auf. Dieses weist voneinander weg weisende Stirnseiten 27.1, 27.2 auf, die hier senkrecht zu der Längsachse 28 des Leitungsabschnitts 25 und parallel zueinander ausgebildet sind. Ferner weist jedes Verteilersegment 20.1, 20.2, 20.3 eine von dem Leitungsabschnitt 25 quer, hier senkrecht zu dessen Längsachse 28 abzweigende Abzweigleitung 30 auf.

Die Verteilersegmente 20.1, 20.2, 20.3 sind dazu bestimmt und geeignet, zusammen mit wenigstens einem benachbarten Verteilersegment einen vorzugsweise wenigstens ein Verteilerventilsegment 21.1, 21.2 aufweisenden Flüssigkeitsverteiler 22 auszubilden, wie er beispielsweise in den Figuren 10 und 11 gezeigt ist. Erfindungsgemäß ist vorgesehen, dass der Leitungsabschnitt 25 jedes Verteilersegments 20.1, 20.2, 20.3 eine sich in Richtung seiner Längsachse 28 erstreckende Trennwand 31.1, 31.2, 31.3 aufweist, die den Leitungsabschnitt 25 in wenigstens zwei sich in Richtung dessen Längsachse 28 erstreckende Kanalteile 32.1.1, 32.1.2; 32.2.1, 32.2.2; 32.3.1, 32.3.2 abteilt, von denen wenigstens ein erster Kanalteil 32.1.1, 32.2.1, 32.3.1 einen Durchgangskanal 33.1, 33.2, 33.3 eines Hauptleitungsabschnitts 35.1, 35.2, 35.3 ausbildet, der zu den voneinander weg weisenden Stirnseiten 27.1, 27.2 des Gehäuses 26 hin offen ist und von denen wenigstens ein zweiter Kanalteil 32.1.2, 32.2.2, 32.3.2 einen Abzweigleitungsabschnitt 36.1, 36.2, 36.3 bildet, in den die Abzweigleitung 30 mündet, wobei vorzugsweise vorgesehen ist, dass der Abzweigleitungsabschnitt 36.1, 36.2, 36.3 zu wenigstens einer der voneinander weg weisenden Stirnseiten 27.1, 27.2 des Gehäuses 26 offen ist.

Bei den insbesondere in den Figuren 1 bis 9 gezeigten drei Ausführungsbeispielen der erfindungsgemäßen Verteilersegmente 20.1, 20.2, 20.3 durchquert die Trennwand 31.1, 31.2, 31.3 den Leitungsabschnitt 25 quer zu seiner Längsachse 28 vollständig und erstreckt sich senkrecht zu der Längsachse 34 der Abzweigleitung 30. Ferner ist die jeweilige Trennwand 31.1, 31.2, 31.3 in diesen Ausführungsbeispielen derart angeordnet, dass sie die Längsachse 28 des Leitungsabschnittes 25 enthält und parallel zu dieser Längsachse 28 angeordnet ist. Die jeweilige Trennwand 31.1, 31.2, 31.3 ist plattenförmig ausgebildet und weist voneinander weg weisende parallele, plane und flache Oberflächen 48.1, 48.2 auf. Dabei begrenzt die eine Oberfläche 48.1 der jeweiligen Trennwand 31.1, 31.2, 31.3 einen Hauptleitungsabschnitt 35.1, 35.2, 35.3, während die andere Oberfläche 48.2 der jeweiligen Trennwand 31.1, 31.2, 31.3 einen Abzweigleitungsabschnitt 36.1, 36.2, 36.3 begrenzt, in den die Abzweigleitung 30 einmündet.

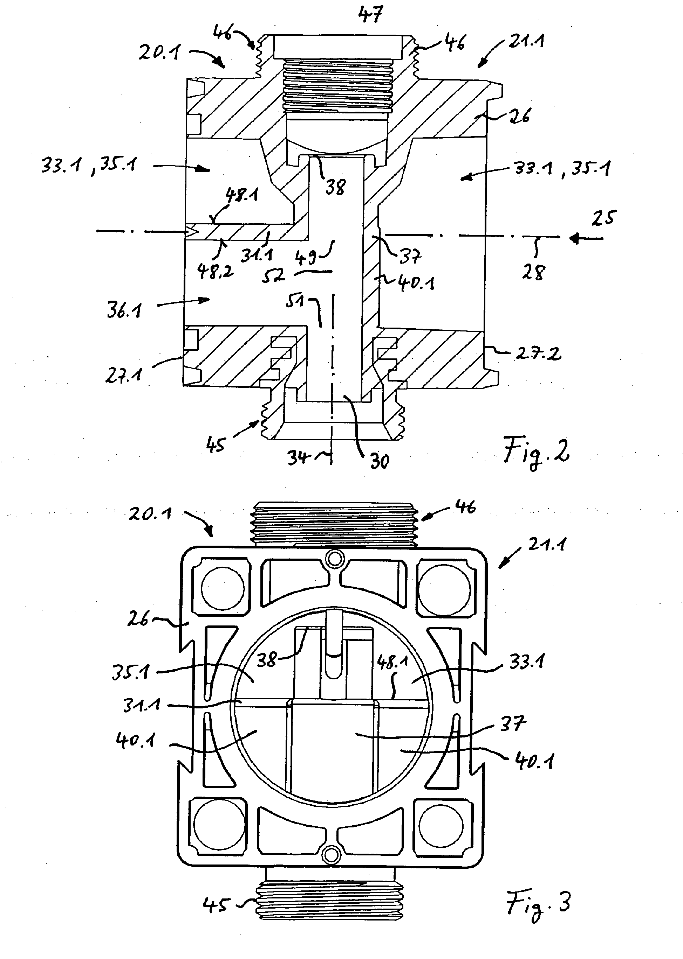

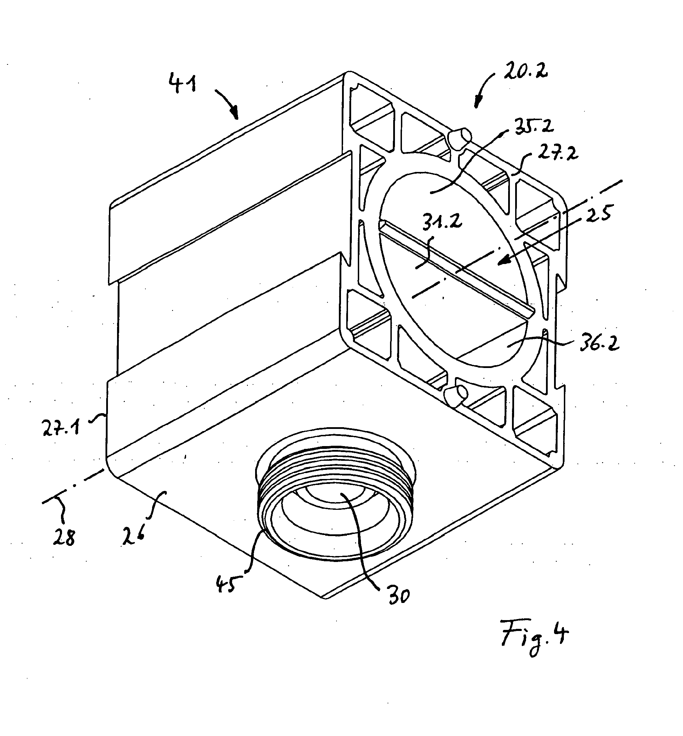

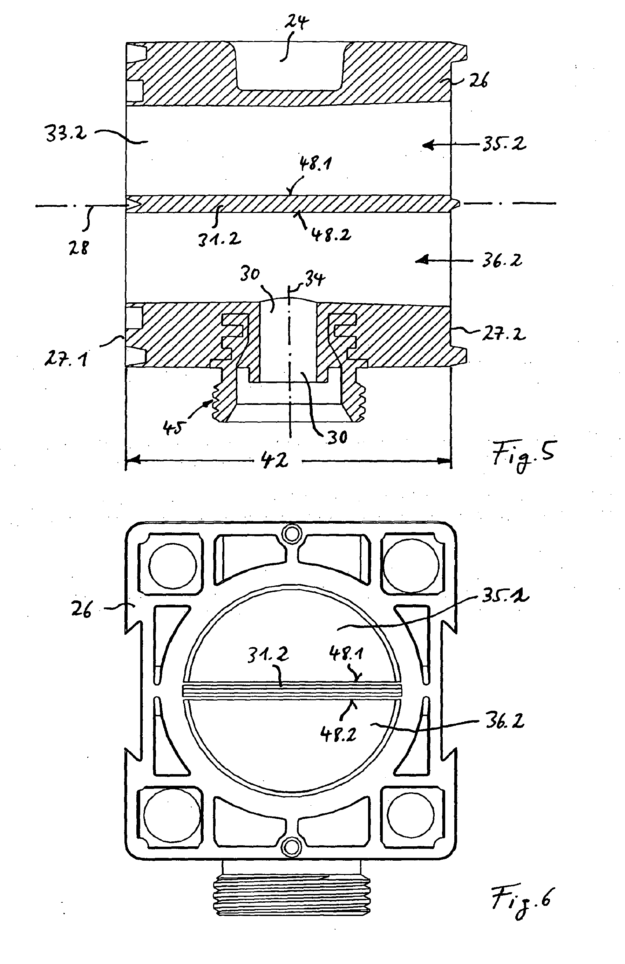

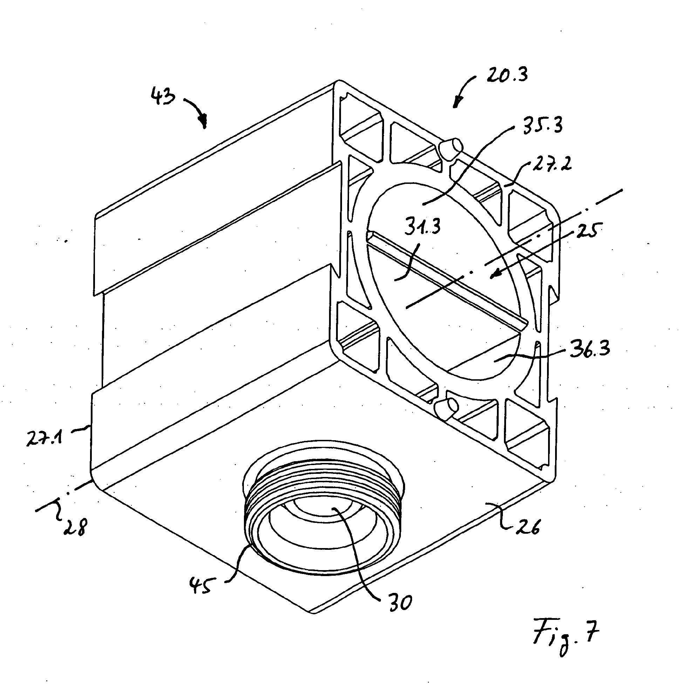

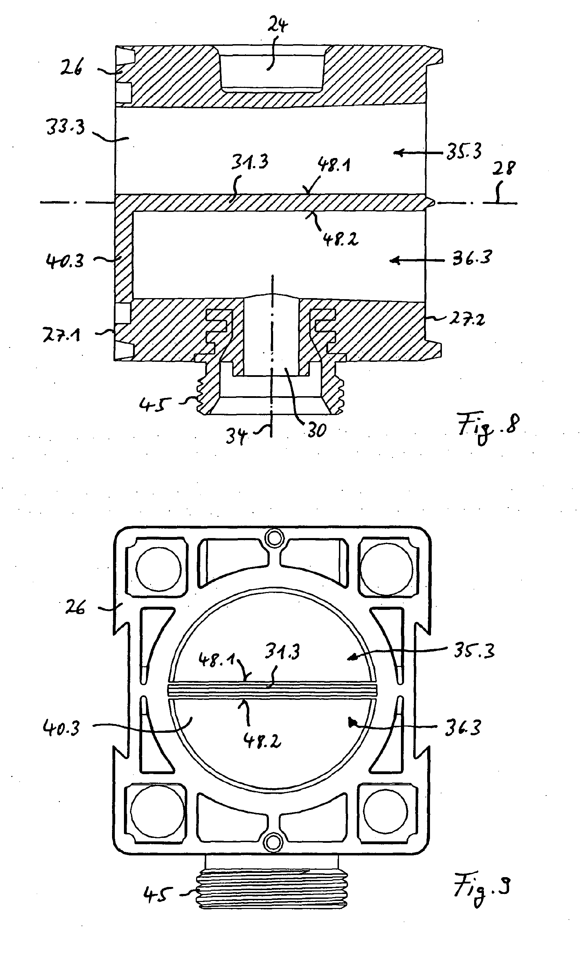

Folglich teilt also die jeweilige Trennwand 31.1, 31.2, 31.3 den Leitungsabschnitt 25 in einen einen Hauptleitungsabschnitt 35.1, 35.2, 35.3 bildenden ersten Kanalteil 32.1.1, 32.2.1, 32.3.1 und in einen einen Abzweigleitungsabschnitt 36.1, 36.2, 36.3 ausbildenden zweiten Kanalteil 32.1.2, 32.2.2, 32.3.2 auf, wobei die beiden Kanalteile 32.1.1, 32.2.1, 32.3.1; 32.1.2, 32.2.2, 32.3.2 in einer senkrecht zur Längsachse 28 des Leitungsabschnitts 25 gebildeten Schnittebene hier jeweils einen im Wesentlichen halbkreissegmentförmigen Innenquerschnitt aufweisen, wie insbesondere aus den Figuren 3, 6 und 9 gut ersichtlich.

Das insbesondere in den Figuren 1 bis 3 gezeigte Verteilersegment 20.1 ist als ein auch als Zonenventil 23 bezeichnetes Verteilerventilsegment 21.1 ausgebildet. Dieses weist einen quer, hier radial zu dem Leitungsabschnitt 25 angeordnetes und hier in diesen hineinragendes Abzweigrohr 37 auf. Dieses weist an seinem der Ventileinsetzöffnung 47 zugeordneten Ende einen verschließbaren Ventilsitz 38 für ein Einstell- und Absperrelement 39 zum Einstellen und gegebenenfalls Absperren des Fluidstromes von dem Hauptleitungsabschnitt 35.1 in das Abzweigrohr 37 und/oder umgekehrt auf. Es versteht sich jedoch, dass das Abzweigrohr nicht notwendigerweise in den Hauptleitungsabschnitt 35.1 hineinragen muss, sondern dass dieses beispielsweise auch auf der Ebene der Oberfläche 48.1 der Trennwand 31.1 oder gegebenenfalls auch weiter in Richtung zu der Abzweigleitung 30 bzw. dem Anschluss 45 hin verlagert, mit einem Ventilsitz enden kann.

In dem insbesondere in den Figuren 1 bis 3 gezeigten Ausführungsbeispiel eines Verteilersegments 20.1 mündet das mit dem Ventilsitz 38 versehene Abzweigrohr 37 im Bereich des von dem Gehäuse 26 umschlossenen Leitungsabschnitts 25 in den Abzweigleitungsabschnitt 36.1 des zweiten Kanalteils 32.1.2 ein, so dass durch ein Verstellen und gegebenenfalls Verschließen des Abzweigrohrs 37 mithilfe des Einstell- und Absperrelements 39 (siehe Figur 10) ein Einstellen und gegebenenfalls Absperren des Fluidstromes von dem Hauptleitungsabschnitt 35.1 in die Abzweigleitung 30 und in den Abzweigleitungsabschnitt 36.1 und/oder umgekehrt bewirkbar ist bzw. bewirkt wird.

In dem gezeigten Ausführungsbeispiel ist der den Abzweigleitungsabschnitt 36.1 bildende zweite Kanalteil 32.1.2 innerhalb des Verteilerventilsegments 21.1 nur über das Abzweigrohr 37 mit dem den Hauptleitungsabschnitt 35.1 bildenden ersten Kanalteil 32.1.1 fluidverbunden. Der den Abzweigleitungsabschnitt 36.1 bildende zweite Kanalteil 32.1.2 ist mit einer sich quer, hier senkrecht zur Längsachse 28 des Leitungsabschnitts 25 erstreckenden Querwand 40.1 begrenzt, die hier senkrecht zu der Trennwand 31.1 ausbildet ist und deren Querwandteile sich parallel zu der Längsachse 34 des Abzweigrohrs 37 beiderseits der Längsachse 34 des Abzweigrohrs 37 erstrecken.

In dem vorliegenden Ausführungsbeispiel bildet die Querwand 40.1 einen Teil des Abzweigrohrs 37 aus. Das Abzweigrohr 37 durchquert die Trennwand 31.1 und in diesem Bereich ist die Trennwand 31.1 von einer hier kreisrunden Öffnung 49 des Abzweigrohrs 37 durchbrochen. Daran schließt sich ein mit der Querwand 40.1 umgebener Kanalteil 52 an, der in einer senkrecht zu der Längsachse 34 des Abzweigrohrs 37 bzw. parallel zu der die Längsachse 28 des Leitungsabschnitts 25 enthaltenden Trennwand 48.1 gebildeten Schnittebene hier einen halbkreisförmigen Querschnitt aufweist.

Dieser Kanalteil 52 geht in eine Abzweigleitungsöffnung 51 des Gehäuses 26 über, die hier mit einem kreisrunden Querschnitt gebildet ist. Wie insbesondere aus den Figuren 2 und 3 ersichtlich, kann ein Fluidstrom bei nicht abgesperrtem Verteilerventil also von dem Hauptleitungsabschnitt 35.1 in das Abzweigrohr 37 strömen und von dort sowohl in den Abzweigleitungsabschnitt 36.1 als auch in die Abzweigleitung 30 und/oder umgekehrt.

Das insbesondere in den Figuren 4 bis 6 gezeigte Verteilersegment 20.2 ist als ein Zwischensegment 41 gestaltet. Bei diesem erstreckt sich die Trennwand 31.2 in Richtung der Längsachse 28 des Leitungsabschnitts 25 über die gesamte Länge 42 des Verteilersegments 20.2 zwischen den voneinander weg weisenden Stirnseiten 27.1, 27.2 des Gehäuses 26. Vereinfacht ausgedrückt, ist bei diesem Verteilersegment 20.2 der Leitungsabschnitt 25 durch die Trennwand 31.2 in zwei hier gleich dimensionierte Kanalteile 32.2.1 und 32.2.2 aufgeteilt, wobei der erste Kanalteil 32.2.1 einen Hauptleitungsabschnitt 35.2 ausbildet und der zweite Kanalteil 32.2.2 einen Abzweigleitungsabschnitt 36.2.

Diese beiden Kanalteile 32.2.1 und 32.2.2 weisen jeweils in einer Schnittebene senkrecht zu der Längsachse 28 des Leitungsabschnitts 25 einen halbkreissegmentförmigen Querschnitt auf. In den einen Abzweigleitungsabschnitt 36.2 bildenden zweiten Kanalteil 32.2.2 mündet die Abzweigleitung 30, deren Längsachse 34 auch hier senkrecht zu der Längsachse 28 des Leitungsabschnitts 25 ausgebildet ist.

In dem insbesondere in den Figuren 7 bis 9 gezeigten Ausführungsbeispiel ist das Verteilersegment 20.3 hinsichtlich des durch die Trennwand 31.3 abgeteilten Abzweigleitungsabschnitts 36.3 als ein Endsegment gestaltet.

Zu diesem Zwecke ist der den Abzweigleitungsabschnitt 36.3 bildende zweite Kanalteil 37.3.2 des Leitungsabschnitts 25 zu einer der Stirnseiten 27.1 des Gehäuses 26 hin durch eine Querwand 40.3 abgeschlossen, während der zweite Kanalteil 32.3.2 zu der anderen Stirnseite 27.2 des Gehäuses 26 hin offen ist, so dass ein Fluidstrom von der Stirnseite 27.2 her durch den Abzweigleitungsabschnitt 36.3 in die Abzweigleitung 30 und/oder umgekehrt möglich ist, nicht jedoch von dem Abzweigleitungsabschnitt 36.3 in einen Leitungsabschnitt eines gegebenenfalls an die andere Stirnseite 27.1 anschließenden Verteilersegments. Wie insbesondere aus Figur 8 ersichtlich, begrenzt die Querwand 40.3 die eine Stirnseite 27.2 des Gehäuses 26. Es versteht sich jedoch, dass eine derartige oder ähnliche Querwand auch in einem beliebigen Bereich zwischen der Abzweigleitung 30 und einer der besagten Stirnseiten 27.1 des Gehäuses 26 angeordnet sein kann.

Mit wenigstens einem als Verteilerventilsegment 21.1 ausgebildeten Verteilersegment 20.1 und wenigstens einem als Endsegment 43 gestalteten Verteilersegment 20.3 sowie vorzugsweise unter Zwischenschaltung wenigstens einem als Zwischensegment 41 gestalteten Verteilersegment 20.2 lässt sich vorteilhaft ein Fluidverteiler 22 aufbauen bzw. zusammensetzen, wie beispielsweise in den Figuren 10 und 11 dargestellt. Zusätzlich zu den genannten erfindungsgemäßen Verteilersegmenten 20.1 und 20.3 sowie gegebenenfalls 20.2 können zum Aufbau eines derartigen Fluidverteilers 22 im Anschluss an das als Verteilerventilsegment 21.1 ausgebildete Verteilersegment 20.1 und/oder im Anschluss an das als Endsegment 43 ausgebildete Verteilersegment 20.3 ein oder mehrere Verteilersegmente nach dem Stand der Technik angeschlossen werden, wobei in den Figuren 10 und 11 jeweils ein Verteilerventilsegment 21.2 nach dem Stand der Technik gezeigt ist. Dieses weist unter anderem einen als Hauptleitungsabschnitt 35.4 gestalteten Leitungsabschnitt auf, der in einer senkrecht zu dessen Längsachse gebildeten Schnittebene einen dem Querschnitt des Leitungsabschnitts 25 der erfindungsgemäßen Verteilersegmente 20.1, 20.2, 20.3 entsprechenden Querschnitt aufweist, der hier kreisförmig gestaltet ist.

Wie aus den Figuren 10 und 11 ersichtlich, kann ein Fluidverteiler 22 aus mehreren Verteilersegmenten 20.1, 20.2, 20.3, 21.2 gegeneinander abdichtend aneinandergesetzt aufgebaut werden. Die hierzu erforderlichen Andrückkräfte können durch Spannen der Verteilersegmente gegeneinander über Haltestäbe 57 erreicht werden, die durch Stabführungen in dem jeweiligen Gehäuse 26 der Verteilersegmente geführt werden können. In Figur 10 ist noch eine Endplatte 56 eingezeichnet, durch welche die Hauptleitung bzw. der Hauptleitungsabschnitt 35.4 eines der Verteilerventilsegmente 21.2 nach dem Stand der Technik oder gegebenenfalls ein Hauptleitungsabschnitt 35.3 eines als Endsegment 43 ausgebildeten Verteilersegments 20.3 verschlossen werden kann.

An dem gegenüberliegenden Ende des Fluidverteilers 22 kann wiederum an einem Verteilerventilsegment 21.2 gemäß dem Stand der Technik oder gegebenenfalls auch unmittelbar an einem als Zonenventil bzw. Verteilerventilsegment 21.1 gestalteten Verteilersegment 20.1 ein den Hauptleitungsabschnitt 35.4 bzw. 35.1 überdeckender Anschlusskörper 60 angeschlossen werden. Dieser kann mit einem Außengewindeanschluss zum Anschließen beispielsweise einer Vorlaufleitung versehen sein. In dem in den Figuren 10 und 11 gezeigten Ausführungsbeispiel erfolgt also die Fluidzuführung jeweils von unten her bzw. gegebenenfalls nach unten hin.

Wie insbesondere aus Figur 11 gut ersichtlich, kann mithilfe der erfindungsgemäßen Verteilersegmente 20.1 und 20.3 sowie gegebenenfalls dem zwischengeschalteten Verteilersegment 20.2 erreicht werden, dass ein Fluidstrom ausgehend von dem Hauptleitungsabschnitt 35.1 aufgezweigt wird in einen ersten Fluidstrom durch das Abzweigrohr 37 eines Verteilerventilsegments 21.1 und in einem zweiten Fluidstrom in bzw. durch den weiterführenden Teil des Hauptleitungsabschnitts 35.1, wobei der erste Fluidstrom innerhalb des ein Verteilerventilsegment 21.1 ausbildenden Verteilersegments 20.1 wiederum aufgeteilt werden kann in einen dritten Fluidstrom durch die Abzweigleitung 30 einerseits und einen vierten Fluidstrom durch den Abzweigleitungsabschnitt 36.1 andererseits. Für den Fall, dass sich an ein Verteilerventilsegment 21.1 unmittelbar ein als Endsegment 43 geschaltetes Verteilersegment 20.3 anschließt, kann also der Fluidstrom aufgeteilt werden in zwei Teilströme, die durch die jeweilige Abzweigleitung 30 des als Verteilerventilsegment 21.1 ausgebildeten Verteilersegments 20.1 und des als Endsegment 43 ausgebildeten Verteilersegments 20.3 strömen können.

Abhängig von der Anzahl der gegebenenfalls zwischengeschalteten und als Zwischensegmente 41 gestalteten Verteilersegmente 20.2 kann der durch das Abzweigrohr 37 des Verteilersegments 20.1 strömende Fluidstrom in drei oder mehr Zweigströme aufgeteilt werden. Es versteht sich, dass die Strömungsrichtung auch gegenüber dem vorstehenden Ausführungsbeispiel umgekehrt verlaufen kann.

Die erfindungsgemäßen Verteilersegmente 20.1, 20.2, 20.3 ermöglichen vorteilhaft eine Weiterleitung der Hauptströmung durch den jeweiligen Hauptleitungsabschnitt 35.1, 35.2, 35.3 in den Hauptleitungsabschnitt eines unmittelbar benachbarten Verteilersegments, so dass gegebenenfalls im Anschluss an ein als Endsegment 43 gestaltetes Verteilersegment 20.3 ein oder mehrere weitere Verteilersegmente angeschlossen werden können, sei es in der Form von erfindungsgemäßen Verteilersegmenten 20.1, 20.2, 20.3 und/oder in der Form von Verteilersegmenten oder Verteilerventilsegmenten 21.2 gemäß dem Stand der Technik.

### BEZUGSZEICHENLISTE

| | | | |
|---|---|---|---|
| 20.1 | (Fluid-) Verteilersegment | 35.2 | Hauptleitungsabschnitt |
| | | 35.3 | Hauptleitungsabschnitt |
| 20.2 | (Fluid-) Verteilersegment | 35.4 | Hauptleitungsabschnitt |
| | | 36.1 | Abzweigleitungsabschnitt |
| 20.3 | (Fluid-) Verteilersegment | | |
| | | 36.2 | Abzweigleitungsabschnitt |
| 21.1 | Verteilerventilsegment | | |
| 21.2 | Verteilerventilsegment | 36.3 | Abzweigleitungs-abschnitt |
| 22 | (Fluid-) Verteiler | | |
| 23 | Zonenventil | 37 | Abzweigrohr |
| 24 | Ausnehmung | 38 | Ventilsitz |
| 25 | Leitungsabschnitt | 39 | Einstell- und Absperrelement |
| 26 | Gehäuse | | |
| 27.1 | Stirnseite von 26 | 40.1 | Querwand |
| 27.2 | Stirnseite von 26 | 40.3 | Querwand |
| 28 | Längsachse von 25 | 41 | Zwischensegment |
| 30 | Abzweigleitung | 42 | Länge von 20.2 |
| 31.1 | Trennwand | 43 | Endsegment |
| 31.2 | Trennwand | 45 | Anschluss |
| 31.3 | Trennwand | 46 | Außengewindestutzen |
| 32.1.1 | Kanalteil | 47 | Ventileinsatzöffnung |
| 32.1.2 | Kanalteil | 48.1 | Oberfläche von 31 |
| 32.2.1 | Kanalteil | 48.2 | Oberfläche von 31 |
| 32.2.2 | Kanalteil | 49 | Öffnung von 37 |
| 32.3.1 | Kanalteil | 51 | Abzweigleitungsöffnung |
| 32.3.2 | Kanalteil | 52 | Kanalteil |
| 33.1 | Durchgangskanal | 56 | Endplatte |
| 33.2 | Durchgangskanal | 57 | Haltestab |
| 33.3 | Durchgangskanal | 58 | Mutter |
| 34 | Längsachse von 30 | 59 | Außengewinde |
| 35.1 | Hauptleitungsabschnitt | 60 | Anschlusskörper |

## Patentansprüche

1. Fluidverteilersegment (20.1, 20.2, 20.3), insbesondere Wasserverteilersegment, vorzugsweise in Heizungsanlagen, das dazu bestimmt und geeignet ist, zusammen mit wenigstens einem benachbarten Verteilersegment einen Fluidverteiler (22) auszubilden, mit einem einen Leitungsabschnitt (25) umschließenden, vorzugsweise aus Kunststoff bestehenden Gehäuse (26), das voneinander weg weisende Stirnseiten (27.1, 27.2) aufweist, die quer zu der Längsachse (28) des Leitungsabschnitts (25) und vorzugsweise parallel zueinander ausgebildet sind, und mit einer von dem Leitungsabschnitt (25) quer, vorzugsweise senkrecht zu dessen Längsachse (28) abzweigenden Abzweigleitung (30),
**dadurch gekennzeichnet,**
**dass** der Leitungsabschnitt (25) eine sich in Richtung seiner Längsachse (28) erstreckende Trennwand (31.1, 31.2, 31.3) aufweist, die den Leitungsabschnitt (25) in wenigstens zwei sich in Richtung dessen Längsachse (28) erstreckende Kanalteile (32.1.1, 32.1.2; 32.2.1, 32.2.2; 32.3.1, 32.3.2) teilt, von denen wenigstens ein erster Kanalteil (32.1.1, 32.2.1, 32.3.1) einen Durchgangskanal (33.1, 33.2, 33.3) eines Hauptleitungsabschnitts (35.1, 35.2, 35.3) ausbildet, der zu den voneinander weg weisenden Stirnseiten (27.1, 27.2) des Gehäuses (26) hin offen ist, und von denen wenigstens ein zweiter Kanalteil (32.1.2, 32.2.2, 32.3.2) einen
Abzweigleitungsabschnitt (36.1, 36.2, 36.3) ausbildet, in den die Abzweigleitung (30) mündet und der zu wenigstens einer der voneinander weg weisenden Stirnseiten (27.1, 27.2) des Gehäuses (26) hin offen ist.

2. Fluidverteilersegment nach Anspruch 1, **dadurch gekennzeichnet, dass** die Trennwand (31.1, 31.2, 31.3) den Leitungsabschnitt (25) quer zu seiner Längsachse (28) vollständig durchquert.

3. Fluidverteilersegment nach Anspruch 1 oder 2, **dadurch gekennzeichnet, dass** die Trennwand (31.1, 31.2, 31.3) sich etwa senkrecht zu der Längsachse (34) der Abzweigleitung (30) erstreckt.

4. Fluidverteilersegment nach einem der Ansprüche 1 bis 3, **dadurch gekennzeichnet, dass** die Trennwand (31.1, 31.2, 31.3) die Längsachse (28) des Leitungsabschnitts (25) enthält.

5. Fluidverteilersegment nach einem der Ansprüche 1 bis 4, **dadurch gekennzeichnet, dass** die Trennwand (31.1, 31.2, 31.3) im Wesentlichen flach gestaltet ist.

6. Fluidverteilersegment nach einem der Ansprüche 1 bis 5, **dadurch gekennzeichnet, dass** die Trennwand (31.1, 31.2, 31.3) plattenförmig ausgebildet ist.

7. Fluidverteilersegment nach einem der Ansprüche 1 bis 6, **dadurch gekennzeichnet, dass** dieses als ein Verteilerventilsegment (21.1) mit einem quer, vorzugsweise radial zu dem Leitungsabschnitt (25) angeordneten und vorzugsweise wenigstens teilweise in diesen hineinragenden Abzweigrohr (37) gestaltet ist, das mit der Abzweigleitung fluidverbunden ist und einen verschließbaren Ventilsitz (38) für ein Einstell- und Absperrelement (39) zum Einstellen und gegebenenfalls Absperren des Fluidstromes von dem Hauptleitungsabschnitt (35.1) in das Abzweigrohr (37) und/oder umgekehrt aufweist.

8. Fluidverteilersegment nach Anspruch 7, **dadurch gekennzeichnet, dass** das mit dem Ventilsitz (38) versehene Abzweigrohr (37) im Bereich des oder in dem von dem Gehäuse (26) umschlossenen Leitungsabschnitt (25) in den Abzweigleitungsabschnitt (36.1) des zweiten Kanalteils (32.1.2) mündet.

9. Fluidverteilersegment nach einem der Ansprüche 7
oder 8, **dadurch gekennzeichnet, dass** der den Abzweigleitungsabschnitt (36.1) bildende zweite Kanalteil (32.1.2) innerhalb des Verteilerventilsegments (21.1) nur über das Abzweigrohr (37) mit dem den Hauptleitungsabschnitt (35.1) bildenden ersten Kanalteil (32.1.1) fluidverbunden ist.

10. Fluidverteilersegment nach einem der Ansprüche 7 bis 9, **dadurch gekennzeichnet, dass** der den Abzweigleitungsabschnitt (36.1) bildende zweite Kanalteil (32.1.2) mit einer sich quer, vorzugsweise senkrecht zu der Längsachse (28) des Leitungsabschnitts (25) erstreckenden, vorzugsweise im Bereich des Abzweigrohrs (37) angeordneten Querwand (40.1) begrenzt ist.

11. Fluidverteilersegment nach Anspruch 10, **dadurch gekennzeichnet, dass** die Querwand (40.1) die Längsachse (34) des Abzweigrohrs (37) enthält oder mit sich beiderseits der Längsachse (34) des Abzweigrohrs (37) erstreckenden Querwandteilen gestaltet ist, deren Querachsen die Längsachse (34) des Abzweigrohrs (37) schneiden.

12. Fluidverteilersegment nach Anspruch 10 oder 11, **dadurch gekennzeichnet, dass** die Querwand (40.1) einen Teil des Abzweigrohrs (37) ausbildet.

13. Fluidverteilersegment nach einem der Ansprüche 10
bis 12, **dadurch gekennzeichnet dass** die Querwand (40.1) senkrecht zu der Trennwand (31.1) ausgebildet ist.

14. Fluidverteilersegment nach Anspruch 1, **dadurch gekennzeichnet, dass** dieses als ein Zwischensegment (41) gestaltet ist, wobei die Trennwand (31.2) sich in Richtung der Längsachse (28) des Leitungsabschnitts (25) im Wesentlichen oder über die gesamte Länge (42) des Fluidverteilersegments (20.2) zwischen den voneinander weg weisenden Stirnseiten (27.1, 27.2) des Gehäuses (26) erstreckt.

15. Fluidverteilersegment nach Anspruch 1, **dadurch gekennzeichnet, dass** dieses als ein Endsegment (43) gestaltet ist, bei dem der den Abzweigleitungsabschnitt (36.3) bildende zweite Kanalteil (37.3.2) des Leitungsabschnitts (25) zu einer Stirnseite (27.1) des Gehäuses (26) hin durch eine Querwand (40.3) abgeschlossen ist, während der erste Kanalteil 32.3.1 zu der anderen Stirnseite (27.2) des Gehäuses (26) hin offen ist.

16. Fluidverteilersegment nach Anspruch 15, **dadurch gekennzeichnet, dass** die Querwand (40.3) die eine Stirnseite (27.2) des Gehäuses (26) begrenzt.

17. Fluidverteiler, der wenigstens ein als Verteilerventilsegment (21.1) ausgebildetes Fluidverteilersegment (20.1) nach einem der Ansprüche 7 bis 13 und wenigstens ein als Endsegment (43) gestaltetes Fluidverteilersegment (20.3) nach einem der Ansprüche 15 oder 16 enthält.

18. Fluidverteiler nach Anspruch 14, **dadurch gekennzeichnet, dass** zwischen dem als Verteilerventilsegment (21.1) ausgebildeten Fluidverteilersegment (20.1) und dem als Endsegment (43) gestalteten Fluidverteilersegment (20.3) wenigstens ein als Zwischensegment (41) gestaltetes Fluidverteilersegment (20.2) nach Anspruch 14 angeordnet ist.

## Geänderte Patentansprüche

### Geänderte Patentansprüche gemäss Regel 86(2) EPÜ.

**1.** Als Verteilerventilsegment (21.1) gestaltetes Fluidverteilersegment (20.1), insbesondere Wasserverteilersegment, vorzugsweise in Heizungsanlagen, das dazu bestimmt und geeignet ist, zusammen mit wenigstens einem benachbarten Verteilersegment einen Fluidverteiler (22) auszubilden, mit einem einen Leitungsabschnitt (25) umschließenden, vorzugsweise aus Kunststoff bestehenden Gehäuse (26), das voneinander weg weisende Stirnseiten (27.1, 27.2) aufweist, die quer zu der Längsachse (28) des Leitungsabschnitts (25) und vorzugsweise parallel zueinander ausgebildet sind, und mit einer von dem Leitungsabschnitt (25) quer, vorzugsweise senkrecht zu dessen Längsachse (28) abzweigenden Abzweigleitung (30), die mit einem quer zu dem Leitungsabschnitt (25) angeordneten Abzweigrohr (38) fluidverbunden ist, wobei der Leitungsabschnitt (25) eine sich in Richtung seiner Längsachse (28) erstreckende Trennwand (31.1) aufweist, die den Leitungsabschnitt (25) in wenigstens zwei sich in Richtung dessen Längsachse (28) erstreckende Kanalteile (32.1.1, 32.1.2) teilt, von denen wenigstens ein erster Kanalteil (32.1.1) einen Durchgangskanal (33.1) eines Hauptleitungsabschnitts (35.1) ausbildet, der zu den voneinander weg weisenden Stirnseiten (27.1, 27.2) des Gehäuses (26) hin offen ist, und von denen wenigstens ein zweiter Kanalteil (32.1.2) einen Abzweigleitungsabschnitt (36.1) ausbildet, in den die Abzweigleitung (30) mündet und der zu wenigstens einer der voneinander weg weisenden Stirnseiten (27.1, 27.2) des Gehäuses (26) hin offen ist,
**dadurch gekennzeichnet,**
**dass** das Abzweigrohr (37) einen verschließbaren Ventilsitz (38) für ein Einstell- und Absperrelement (39) zum Einstellen und gegebenenfalls Absperren des Fluidstromes von dem Hauptleitungsabschnitt (35.1) in das Abzweigrohr (37) und/oder umgekehrt aufweist

**2.** Fluidverteilersegment nach Anspruch 1, **dadurch gekennzeichnet, dass** das Abzweigrohr (37) radial zu dem Leitungsabschnitt(25) angeordnet ist.

**3.** Fluidverteilersegment nach Anspruch 1 oder 2, **dadurch gekennzeichnet, dass** das Abzweigrohr (37) wenigstens teilweise in den Leitungsabschnitt (25) hineinragt.

**4.** Fluidverteilersegment nach einem der Ansprüche 1 bis 3, **dadurch gekennzeichnet, dass** das mit dem Ventilsitz (38) versehene Abzweigrohr (37) im Bereich des oder in dem von dem Gehäuse (26) umschlossenen Leitungsabschnitt (25) in den Abzweigleitungsabschnitt (36.1) des zweiten Kanalteils (32.1.2) mündet.

**5.** Fluidverteilersegment nach einem der Ansprüche 1 bis 4, **dadurch gekennzeichnet, dass** der den Abzweigleitungsabschnitt (36.1) bildende zweite Kanalteil (32.1.2) innerhalb des Verteilerventilsegments (21.1) nur über das Abzweigrohr (37) mit dem den Hauptleitungsabschnitt (35.1) bildenden ersten Kanalteil (32.1.1) fluidverbunden ist.

**6.** Fluidverteilersegment nach einem der Ansprüche 1 bis 5, **dadurch gekennzeichnet, dass** der den Abzweigleitungsabschnitt (36.1) bildende zweite Kanalteil (32.1.2) mit einer sich quer, vorzugsweise senkrecht zu der Längsachse (28) des Leitungsabschnitts (25) erstreckenden, vorzugsweise im Bereich des Abzweigrohrs (37) angeordneten Querwand (40.1) begrenzt ist.

**7.** Fluidverteilersegment nach Anspruch 6, **dadurch gekennzeichnet, dass** die Querwand (40.1) die Längsachse (34) des Abzweigrohrs (37) enthält oder mit sich beiderseits der Längsachse (34) des Abzweigrohrs (37) erstreckenden Querwandteilen gestaltet ist, deren Querachsen die Längsachse (34) des Abzweigrohrs (37) schneiden.

**8.** Fluidverteilersegment nach Anspruch 6 oder 7, **dadurch gekennzeichnet, dass** die Querwand (40.1) einen Teil des Abzweigrohrs (37) ausbildet.

**9.** Fluidverteilersegment nach einem der Ansprüche 6 bis 8, **dadurch gekennzeichnet dass** die Querwand (40.1) senkrecht zu der Trennwand (31.1) ausgebildet ist.

**10.** Fluidverteiler, der wenigstens ein als Verteilerventilsegment (21.1) ausgebildetes Fluidverteilersegment (20.1) nach einem der Ansprüche 1 bis 9 und wenigstens ein als Endsegment (43) gestaltetes Fluidverteilersegment (20.3), insbesondere Wasserverteilersegment enthält, das dazu bestimmt und geeignet ist, zusammen mit wenigstens einem benachbarten Verteilersegment den Fluidverteiler (22) auszubilden und das ein einen Leitungsabschnitt (25) umschließendes, vorzugsweise aus Kunststoff bestehendes Gehäuse (26) mit voneinander weg weisenden Stirnseiten (27.1, 27.2) aufweist, die quer zu der Längsachse (28) des Leitungsabschnitts (25) und vorzugsweise parallel zueinander ausgebildet sind, und mit einer von dem Leitungsabschnitt (25) quer, vorzugsweise senkrecht zu dessen Längsachse (28) abzweigenden Abzweigleitung (30), wobei der Leitungsabschnitt (25) eine sich in Richtung seiner Längsachse (28) erstreckende Trennwand (31.3) aufweist, die den Leitungsabschnitt (25) in wenigstens zwei sich in Richtung dessen Längsachse (28) erstreckende Kanalteile (32.3.1, 32.3.2) teilt, von denen wenigstens ein erster Kanalteil (32.3.1) einen Durchgangskanal (33.3) eines Hauptleitungsabschnitts (35.3) ausbildet, der zu den voneinander weg weisenden Stirnseiten (27.1, 27.2) des Gehäuses (26) hin offen ist, und von denen wenigstens ein zweiter Kanalteil (32.3.2) einen Abzweigleitungsabschnitt (36.3) ausbildet, in den die Abzweigleitung (30) mündet und der zu wenigstens einer der voneinander weg weisenden Stirnseiten (27.1, 27.2) des Gehäuses (26) hin offen ist, wobei der den Abzweigleitungsabschnitt (36.3) bildende zweite Kanalteil (37.3.2) des Leitungsabschnitts (25) zu einer Stirnseite (27.1) des Gehäuses (26) hin durch eine Querwand (40.3) abgeschlossen ist, während der erste Kanalteil (32.3.1) zu der anderen Stirnseite (27.2) des Gehäuses (26) hin offen ist.

**11.** Fluidverteiler nach Anspruch 10, **dadurch gekennzeichnet, dass** die Querwand (40.3) die eine Stirnseite (27.2) des Gehäuses (26) begrenzt.

**12.** Fluidverteiler nach einem der Ansprüche 10 oder 11, **dadurch gekennzeichnet, dass** zwischen dem als Verteilerventilsegment (21.1) ausgebildeten Fluidverteilersegment (20.1) und dem als Endsegment (43) gestalteten Fluidverteilersegment (20.3) wenigstens ein als Zwischensegment (41) gestaltetes Fluidverteilersegment (20.2), insbesondere Wasserverteilersegment angeordnet ist, das dazu bestimmt und geeignet ist, zusammen mit wenigstens einem benachbarten Verteilersegment den Fluidverteiler (22) auszubilden, und das ein einen Leitungsabschnitt (25) umschließendes, vorzugsweise aus Kunststoff bestehendes Gehäuse (26) mit voneinander weg weisenden Stirnseiten (27.1, 27.2) aufweist, die quer zu der Längsachse (28) des Leitungsabschnitts (25) und vorzugsweise parallel zueinander ausgebildet sind, und mit einer von dem Leitungsabschnitt (25) quer, vorzugsweise senkrecht zu dessen Längsachse (28) abzweigenden Abzweigleitung (30), wobei der Leitungsabschnitt (25) eine sich in Richtung seiner Längsachse (28) erstreckende Trennwand (31.2) aufweist, die den Leitungsabschnitt (25) in wenigstens zwei sich in Richtung dessen Längsachse (28) erstreckende Kanalteile (32.2.1, 32.2.2) teilt, von denen wenigstens ein erster Kanalteil (32.2.1) einen Durchgangskanal (33.2) eines Hauptleitungsabschnitts (35.2) ausbildet, der zu den voneinander weg weisenden Stirnseiten (27.1, 27.2) des Gehäuses (26) hin offen ist, und von denen wenigstens ein zweiter Kanalteil (32.2.2) einen Abzweigleitungsabschnitt (36.2) ausbildet, in den die Abzweigleitung (30) mündet und der zu wenigstens einer der voneinander weg weisenden Stirnseiten (27.1, 27.2) des Gehäuses (26) hin offen ist, wobei die Trennwand (31.2) sich in Richtung der Längsachse (28) des Leitungsabschnitts (25) im Wesentlichen oder über die gesamte Länge (42) des Fluidverteilersegments (20.2) zwischen den voneinander weg weisenden Stirnseiten (27.1, 27.2) des Gehäuses (26) erstreckt.

**13.** Fluidverteilersegment oder Fluidverteiler nach einem der Ansprüche 1 bis 12 **dadurch gekennzeichnet, dass** die Trennwand (31.1, 31.2, 31.3) den Leitungsabschnitt (25) quer zu seiner Längsachse (28) vollständig durchquert.

**14.** Fluidverteilersegment oder Fluidverteiler nach einem der Ansprüche 1 bis 13, **dadurch gekennzeichnet, dass** die Trennwand (31.2) sich etwa senkrecht zu der Längsachse (34) der Abzweigleitung (30) erstreckt.

**15.** Fluidverteilersegment oder Fluidverteiler nach einem der Ansprüche 1 bis 14, **dadurch gekennzeichnet, dass** die Trennwand (31.1, 31.2, 31.3) die Längsachse (28) des Leitungsabschnitts (25) enthält.

**16.** Fluidverteilersegment oder Fluidverteiler nach einem der Ansprüche 1' bis 15, **dadurch gekennzeichnet, dass** die Trennwand (31.1, 31.2, 31.3) im Wesentlichen flach gestaltet ist.

**17.** Fluidverteilersegment oder Fluidverteiler nach einem der Ansprüche 1 bis 16, **dadurch gekennzeichnet, dass** die Trennwand (31.1, 31.2, 31.3) plattenförmig ausgebildet ist.
